# EUROPEAN PATENT APPLICATION

(11) **EP 3 883 127 A1**
(43) Date of publication of application: **22.09.2021**
(21) Application number: 20382197.0
(22) Date of filing: 16.03.2020
(51) Int. Cl.: H02P 29/024

(54) **POWER ACTIVATION DEVICE AND METHOD FOR A MULTI-PHASE ELECTRIC MOTOR**

(71) Applicant: Jiménez Olazábal, Andrés, 28224 Pozuelo de Alarcón (ES)
(72) Inventor: Jiménez Olazábal, Andrés, 28224 Pozuelo de Alarcón (ES)
(74) Representative: Elzaburu S.L.P.

(57) **Abstract**

Run2Phase: power activation device for a multi-phase electric motor comprising:
• a switch assembly comprising n-branches of switches (S1, S2, S3, S4, S5, S6) connected in parallel and connected in series to a first electrical terminal (A, B, C, ...) of the phases (a, b, c, ...),
• each branch of switches comprising two switches (S1, S4; S2, S5; S3; S6) located in series, one switch (S1, S2, S3) connected to a power line (10) and the other (S4, S5, S6) connected to ground (11),
• at least one additional branch of switches (S7, S8) connected in parallel to the branches of the switch assembly and in series with a second terminal (A', B', C', ...) of the phases (a, b, c, ...),
• a driving means connected to the switches assembly and shifting between a normal mode and a failure mode when a failure in a phase (a, b, c, ...) is detected.

## Description

### Field of the invention

The present invention refers to a multi-phase electric motor, for instance, a three-phase motor, with a Run2Phase, i.e., a power activation device and a method for the electric phases to operate the motor in a normal mode based on the sequential switching of the phases and also in case of an electric failure of one of the phases.

### Background of the invention

In recent years, electric motors have been incorporated into aircrafts, cars and household machines to perform various tasks. In the aeronautic sector, for instance, electric motors have been used in flight control surfaces or landing gear. In the automotive sector, even as the main traction power. Electric motors reduce fuel consumption due to the weight reduction obtained by replacing mechanical, hydraulic and pneumatic systems for these lighter electric systems.

The components of this kind of motor are the stator, stationary element and the rotor, rotating element. The rotor is placed inside the core of the stator. Winding phases are supplied to the stator winding which produces a rotating magnetic field.

Any kind of electrical failure in a phase of an electric motor phase, a short circuit or an open circuit, will result in a permanent failure in the motor that prevents its continuous operation. Therefore, a new electric motor must be mounted on the critical flight element or power train in electric vehicles after electrical or mechanical failure. This highly increases maintenance costs.

So far different solutions have been developed and implemented to prevent failure on critical motors.

A first known solution consists of critical flight elements that mount redundant electric motors to ensure their operability in the event of electrical or mechanical failures in the electromechanical actuators. To do this, the alive motor must freely operate the mechanics to continue the operation of the critical flight element.

This solution does not prevent the failure of a motor phase as it simply uses a second motor connected via mechanical or differential gears to continue the operation.

Another solution consists on electric power train elements in cars that mount redundant motors of different technologies, electric, gas, oil..., to ensure their operability in case of electrical or mechanical failures in electric motors. In purely electric vehicles, there are no redundancy in the motors, but some models include extra phases to operate the mechanics to continue the operation.

Known permanent magnet electric motor based on three electric winding phases placed in the stator are connected internally to form a star or delta connection. In both configurations, there are normally three terminals available to be driven by the power electronics and the rest of the electrical terminals are connected together internally in the motor.

Two characteristics are important to be controlled in each winding phase, the absolute value and the direction of the current through each phase. Each phase creates a magnetic field distributed each 120º. The sum of the coordinates of these three vectors, i.e., the magnetic fields, creates a single magnetic field vector in the stator that is able to rotate through 360º and is the responsible for creating a synchronous rotation of the rotor based on permanent magnets.

The absolute value of the current through the winding phase is controlled on the basis of Pulse Width Modulation (PWM) which means that once the direction of the current is selected, one of the power switches, typically the one that connects one terminal to power, opens and closes at a high frequency. The opening and closing duty cycle of power switch defines the amount of current passing through the winding phase.

In three-phase motors, where three electrical terminals are available, two winding phases in star winding architecture, or three phases in delta connection, are energized at same time in order to allow the current to flow through both winding phases. This implies that the various magnetic fields are always created and are summed to create the one magnetic field in stator. The maximum number of combinations of three electrical terminals operated in pairs results in six magnetic field vector combinations separated 60º each, that are sufficient to produce the rotating magnetic field in the stator.

In case of a single failure, both open circuit and short circuit, of any of these three phases in classical operation based in three available terminals, the two alive winding phases could generate only two different magnetic fields separated 180º. In this case, the rotation could not be possible, and motor stops the continuous rotation.

### Summary of the invention

It is therefore an object of the present invention to provide an electric motor that allows the continuous operation upon electrical failure in any of the winding phases while reducing reparation costs and allowing testing prior to its installation and along the operating life.

The electric motor object of the invention comprises n-phases (a, b, c, ...) and each phase (a, b, c, ...) comprises a first electrical terminal (A, B, C, ...) and a second electrical terminal (A', B', C', ...). The power activation device object of the invention comprises:
- A switch assembly comprising n-branches of switches (S1, S2, S3, S4, S5, S6), the branches being connected in parallel and each branch configured to be connected in series to the first electrical terminal (A, B, C, ...) of a phase (a, b, c, ...).
- Each branch of switches comprising two switches (S1, S4; S2, S5; S3; S6) located in series, one switch (S1, S2, S3) configured to be connected to a power line and the other switch (S4, S5, S6) configured to be connected to ground.
- At least one additional branch of switches (S7, S8) connected in parallel to the branches of the switch assembly and configured to be connected in series with the second terminal (A', B', C', ...) of the phases (a, b, c, ...). In one embodiment, the electric motor comprises the phases (a, b, c, ...) star-connected. In another embodiment, the second terminals (A', B', C') are connected in a neutral point (N) and the additional branch of switches (S7, S8) is configured to be connected in series with the neutral point (N).
- A driving means for driving the multi-phase electric motor, the driving means being connected to the switches assembly and being configured to shift between a power activation normal mode of operation and a power activation failure mode of operation when a failure in a phase (a, b, c, ...) is detected. In the failure mode the driving means is configured to sequentially drive the phases (a, b, c):
   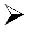 for each phase without failure (b, c, ...):
      - close the switch (S2, S3) of the switch assembly configured to be connected to the power line (10) and close the switch (S8) of the additional branch of switches configured to be connected to ground (11) such that current flows through the phase (b, c, ...) from the first electrical terminal (B, C) to the second electrical terminal (B', C') to generate a positive vector of the phases (b, c, ...),
      - close the switch (S5, S6) of the switch assembly configured to be connected to ground (11) and close the switch (S7) of the additional branch of switches configured to be connected to power line (10) such that current flows through the phase (b, c, ...) from the second electrical terminal (B', C') to the first electrical terminal (B, C) to generate a negative vector of the phases (b, c, ...),
   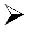 for the failed phase (a):
      - simultaneously close switches (S5, S6) of the switch assembly configured to be connected to ground (11) and configured to be connected to the phases without failure (b, c, ...) and close the switch (S7) of the additional branch of switches configured to be connected to power line (10) such that current simultaneously flows through the phases without failure (b, c, ...) from the second electrical terminal (B', C') to the first electrical terminal (B, C) to generate by combination of the vectors of the phases without failure (b, c, ...) a negative vector of the failed phase (a),
      - simultaneously close switches (S2, S3) of the switch assembly configured to be connected to the power line (10) and configured to be connected to the phases without failure (b, c, ...) and close the switch (S8) of the additional branch of switches configured to be connected to ground (11) such that current simultaneously flows through the phases without failure (b, c, ...) from the first electrical terminal (B, C) to the second electrical terminal (B', C') to generate by combination of the vectors of the phases without failure (b, c, ...) a positive vector of the failed phase (a).

According to the above, the driving means is configured to drive both terminals of a phase, i.e., the first terminal and the second terminal. In a star-connection, in an embodiment in which the second terminals are additionally connected in a neutral electrical point, said neutral point is commanded by the additional branch of switches (S7, S8).

This object is achieved with an electric motor with at least all terminals of each electric phase available to be driven by the driving means or power electronics. Each winding phase would be equipped with a power electronic branch based on two electrical power switches (MOSFETs, IGBTs..) in each terminal of winding phase.

In order to define the direction of the current in each winding phase, the power switches that drives the current through the winding phase introduce the power supply in one first terminal of the winding phase and connects the second terminal to ground, obtaining the positive direction of current along the winding. The opposite connection of power switches sets the negative direction of current in the winding phase.

The claimed invention allows, in case of failure of one of the phases, the operation of the other two phases at the same time in order to recover the two lost magnetic field vectors caused by the loss of a winding phase.

In this way, in a three-phase motor, the six combinations magnetic field vectors separated 60º each are recovered. The simultaneous operation of the two alive phases can generate the same two lost magnetic vectors in stator by summing the contributions of alive phases at 60º separation. In this way the operation is fully recovered having a slightly reduced efficiency when the simultaneous operation of phases is required.

It is also an object of the present invention the multiphase electric motor comprising a device according to the above and also the power activation method comprising, in the failure mode, the step of the driving means sequentially driving the phases (a, b, c):
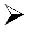 for each phase without failure (b, c, ...):
   - closing the switch (S2, S3) of the switch assembly configured to be connected to the power line (10) and closing the switch (S8) of the additional branch of switches configured to be connected to ground (11) such that current flows through the phase (b, c, ...) from the first electrical terminal (B, C) to the second electrical terminal (B', C') generating a positive vector of the phases (b, c, ...),
   - closing the switch (S5, S6) of the switch assembly configured to be connected to ground (11) and closing the switch (S7) of the additional branch of switches configured to be connected to power line (10) such that current flows through the phase (b, c, ...) from the second electrical terminal (B', C') to the first electrical terminal (B, C) generating a negative vector of the phases (b, c, ...),
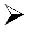 for the failed phase (a):
   - simultaneously closing switches (S5, S6) of the switch assembly configured to be connected to the ground (11) and configured to be connected to the phases without failure (b, c, ...) and closing the switch (S7) of the additional branch of switches configured to be connected to power line (10) such that current simultaneously flows through the phases without failure (b, c, ...) from the second electrical terminal (B', C') to the first electrical terminal (B, C) to generate a negative vector of the failed phase (a) by combination of the vectors of the phases without failure (b, c, ...),
   - simultaneously closing switches (S2, S3) of the switch assembly configured to be connected to the power line (10) and configured to be connected to the phases without failure (b, c, ...) and closing the switch (S8) of the additional branch of switches configured to be connected to ground (11) such that current simultaneously flows through the phases without failure (b, c, ...) from the first electrical terminal (B, C) to the second electrical terminal (B', C') to generate a positive vector of the failed phase (a) by combination of the vectors of the phases without failure (b, c, ...).

### Description of the figures

To complete the description and in order to provide for a better understanding of the invention, drawings are provided. Said drawings form an integral part of the description and illustrate a preferred embodiment of the invention. The drawings comprise the following figures.
FIG. 1 shows the classical connection known in the state of the art for a three-phase motor in star and delta configuration having three electrical terminals available, A, B and C.
FIG. 2 shows the known connection between the three terminals of a three-phase motor and the switch assembly.
FIG. 3 shows the known activation of one of the possible combinations to generate a current into the phases in the switch assembly of figure 2.
FIG. 4 shows the detailed magnetic vector analysis of a known three-phase motor driven by a known driving means.
FIG. 5 shows the detailed magnetic vector analysis of a known three-phase motor in case of a failure in phase a.
FIG. 6 shows the possible connections of the invention for a three-phase motor in star or delta configuration having up to six electrical terminals, A, A', B, B', C and C', i.e., two terminals in each phase.
FIG. 7 shows an embodiment of the invention for a three-phase electric motor and a corresponding switch assembly comprising eight different switches, S1 to S8. The second terminals (A', B', C') are connected in a neutral point (N) connected in series with the additional branch of switches (S7, S8).
FIG. 8 shows the detailed magnetic vector analysis of the embodiment of figure 7 for a first embodiment in a normal mode of operation of the motor.
FIG. 9 shows the detailed magnetic vector analysis of the embodiment of figure 7 for a second embodiment in a normal mode of operation of the motor.
FIG. 10 shows the detailed magnetic vector analysis of the embodiment of figure 7 when a failure occurs in phase a.
FIG. 11 shows the detailed magnetic vector analysis of the embodiment shown in figure 7 where the maximum activation area for each phase is delimited. It represents a configuration based on a single pair of pole rotor. This angle is reduced proportionally to number of pair of poles.
FIG. 12 shows an embodiment of the power activation device required to operate the motor even in case of phase failure.
FIG. 13 shows a table of the activations of each phase in the embodiment shown in figure 12 according to the sensor activation.

### Detailed description of the invention

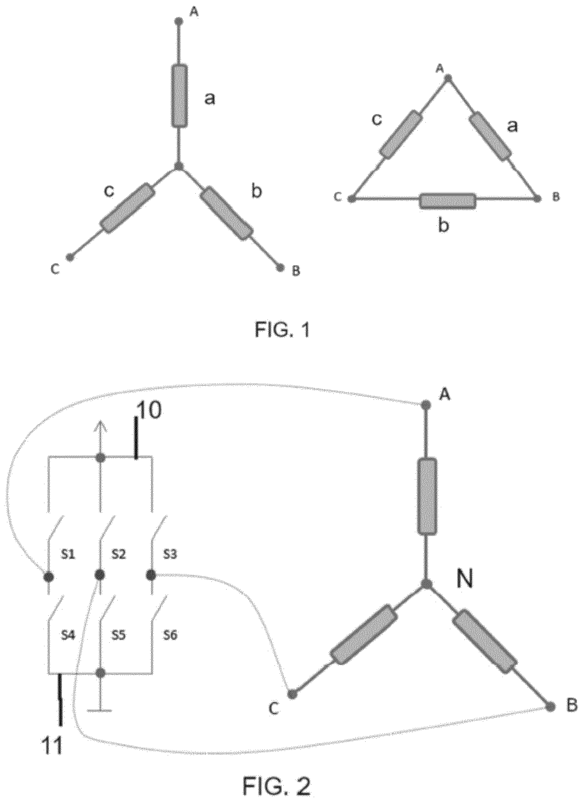

The classical electrical connection of winding phases, i.e., in star and delta configuration, for brushless three-phase motors is shown in figure 1. Three electrical terminals, A, B and C are available for being driven by a driving means.

The known power electronics required is shown in figure 2. More specifically, the electric motor comprising three-phases (a, b, c) in star connection. Each phase (a, b, c) comprises an electrical terminal (A, B, C) that are available, being the other three terminals of the phases (a, b, c) connected together into a neutral point N.

The known power activation device comprises a switch assembly comprising three-branches of power switches (S1, S2, S3, S4, S5, S6). The branches are connected in parallel. Each branch is connected in series to one of the electrical terminals (A, B, C) of a phase (a, b, c).

Each branch of switches comprises two switches (S1, S4; S2, S5; S3; S6) located in series. One switch (S1, S2, S3) connected to a power line (10) and the other switch (S4, S5, S6) connected to ground (11). Thus, it comprises six different power switches, S1 to S6. S1 to S3 are connected to a power line (10) and S4 to S6 are connected to a ground line (11).

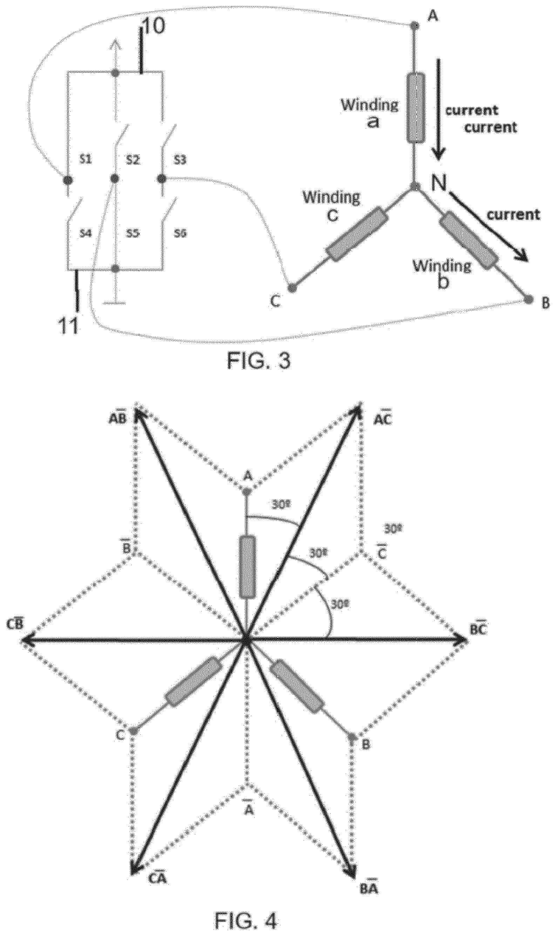

It also comprises a driving means for driving the three-phase electric motor connected to the switch's assembly. The driving means is able to power the different phases (a, b, c) sequentially. When switches S1 and S5 are activated, power supply (10) is connected to terminal A and the electrical reference or ground (11) is connected to terminal B. This generates a current that flows from terminal A to terminal B as shown in figure 3.

Conventionally, positive current direction is defined as a current flowing in winding coil a, as it is shown in figure 3. Negative current direction is defined as a current flowing in winding coil b. Positive current is understood as a current flowing from the first terminal (A, B, C) to the second terminal, in this embodiment the neutral point N of, for instance, star connection. Negative current is understood as a current flowing from the second terminal, in this embodiment, the neutral point N of star connection, to the first terminal (A, B, C).

Figure 4 shows the known magnetic vector generation according to the known electronic powers that activate the three winding phases sequentially.

As soon as switches S1 and S5 are activated as shown in figure 3, vector AB is generated having positive current in phase a and negative current in phase b. After switches S1 and S5, the following sequential activation is switches S1 and S6, this combination creates de magnetic vector AC. The following activation is switches S2 and S6, this combination creates de magnetic vector BC. The following activation is switches S2 and S4, this combination creates de magnetic vector BA. The following activation is switches S3 and S4, this combination creates de magnetic vector CA. The following activation is switches S3 and S5, this combination creates de magnetic vector CB. The following activation is witches S1 and S5, this combination creates de magnetic vector AB, that is the first activated vector described.

In order to obtain the rotary magnetic vector, winding phases a, b, c are powered sequentially from AC, BC, BA, CA, CB and AB. The activation of these six combinations allows to create a rotative magnetic vector used to synchronize the magnet of rotor. The angular separation of these six vectors is 60º.

It has to be note that vectors AB and AC are separated 30 º from phase a and the same happens with the other vectors and its corresponding phases.

In a brushless DC motor in order to sense exactly where the rotor is positioned at any time, sensors, for instance, hall sensors, are located near the rotor to detect its orientation very precisely by measuring variations in the magnetic field. Particularly, in the shown embodiment of the state of the art, three hall sensors are located in the positions in which the magnetic vectors are obtained in order to detect the rotor and allow the driving means to activate the sequential activation of the switches. Thus, the sensors are located under the position of the different vectors AC, BC, BA, CA, CB and AB, i.e., shifted 30º from the position of the phases a, b, c.

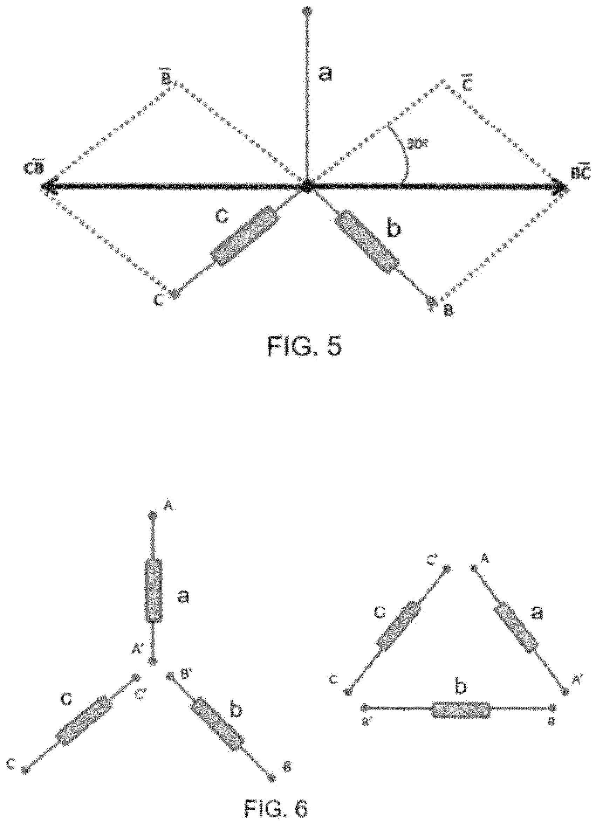

Figure 5 shows the detailed magnetic vector analysis of a known three phase motor in case of a short-circuit failure in phase a. In this way, four magnetic vectors are not possible to be powered and only two remaining vectors are available. In this case, as only two vectors are available, a controlled continuous operation of the motor is not possible. In case an open-circuit failure is produced in phase a, no current could flow through the remaining winding phases, therefore, no magnetic vector could be created.

The possible connections according to an embodiment of the invention are shown in figure 6 for a three-phase motor in star configuration having up to six electrical terminals, A, A', B, B', C and C'. In these configurations, the three winding phases a, b, c are independent and the driving means could power any direction of current, positive or negative, in each phase a, b, c.

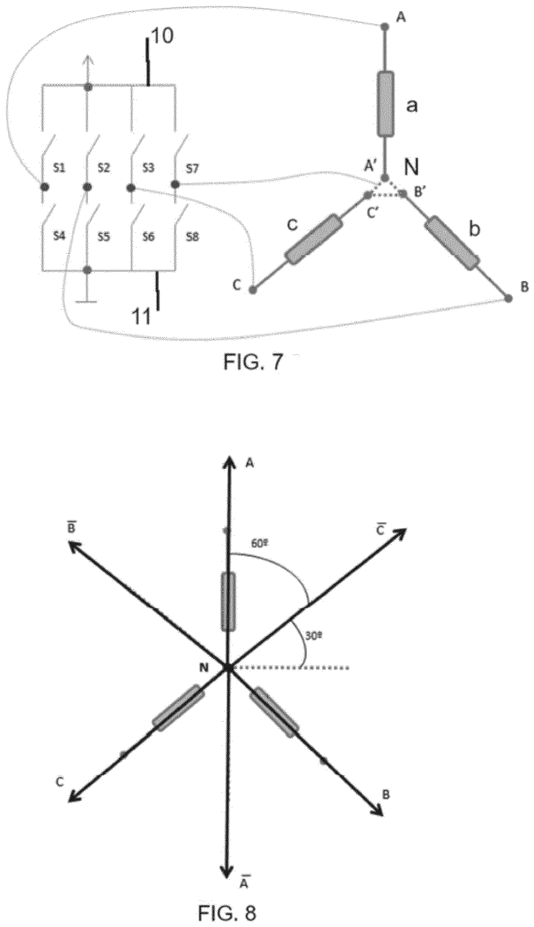

In the embodiment shown in figure 7 for a star connection in stator, the terminals A', B' and C' are connected together to create a unique electrical terminal known as neutral point N. In this case, A', B' and C' are connected together in order to reduce the number of power switches required. In this way, the minimum power electronics is required to operate the motor because it only requires up to four electrical power branches comprising eight power switches, S1 to S8. The terminal known as neutral point N is connected to a power electronic branch comprising power switches S7 and S8. The additional branch is connected in parallel to the branches of the switch assembly and is connected in series with the neutral point N of the phases a, b, c.

As previously stated, positive current is understood as a current flowing from the first terminal (A', B', C') to the neutral point (N) and negative current is understood as a current flowing from the neutral point (N) to a first terminal (A', B', C').

Figure 8 shows a first embodiment for a normal mode of operation of the driving means. In order to obtain the rotary magnetic vector, winding phases (a, b, c) are powered independently controlling the direction of the current in each winding phase (a, b, c). They are powered sequentially, for instance, from A, C, B, A, C and B.

The driving means is configured to generate 2 x n vectors equally spaced among them, each vector located in line with a phase (a, b, c), i.e. without having a shift or displacement from the phase vector, such that there are zero degrees between both vectors. In the shown embodiment, the driving means generates six vectors, spaced 60º.

In this embodiment, the driving means is configured to:
- close the switch (S1, S2, S3) of the switch assembly configured to be connected to power line (10) and close the switch (S8) of the additional branch of switches configured to be connected to ground (11) such that current flows through the phase (a, b, c, ...) from the first electrical terminal (A, B, C) to the second electrical terminal (A', B', C') to generate a positive vector of the phase (a, b, c, ...). More specifically, according to the embodiment of figure 8, sequentially for each phase (a, b, c), the corresponding switch (S1, S2, S3) is closed and the neutral point (N) is connected to ground (11) such that, for each phase (a, b, c) a positive vector is generated which is located onto the phase (a, b, c).
- close the switch (S4, S5, S6) of the switch assembly configured to be connected to the ground (11) and close the switch (S7) of the additional branch of switches configured to be connected to power line (10) such that current flows through the phase (a, b, c, ...) from the second electrical terminal (A', B', C') to the first electrical terminal (A, B, C) to generate a negative vector of the phase (a, b, c, ...). More specifically, according to the embodiment of figure 8, sequentially for each phase (a, b, c), the corresponding switch (S4, S5, S6) is closed and the neutral point (N) is connected to power (10) such that, for each phase (a, b, c) a negative vector is generated which is located in the same line of the phase (a, b, c).

As soon as switches S1 and S8 are activated, vector A is generated having positive current in phase a.

The angular separation among the magnetic vectors is 60º as the known three-phase motor operation. In this case, the generated vectors A, B, C are in line with the phases, instead of having a phase drift of 30º as in the embodiment shown in figure 4.

Therefore, the proposed normal operation of a three-phase motor, where all the six terminals (A, B, C, A', B', C') of phases (a, b, c) are available, is to command each phase (a, b, c) independently and sequentially in order to produce the rotating magnetic field in the rotor. In this case, the maximum number of combinations of three electrical phases (a, b, c) operated independently with both possible directions of current resulting also in six magnetic field vector combinations (A, C, B, A, C, B) separated 60º each, that are enough to produce the rotating magnetic field in the stator.

Additionally, in order to avoid overcurrent in case of short-circuits in any winding phase (a, b, c), in the normal mode of operation of the above embodiment, the driving means is configured to connect the first terminal (A, B, C, ...) and the neutral point (N) of the phases that are not being activated, i.e., driven or powered, to the same potential.

Thus, switches S5 and S6 may also be activated to connect terminals B and C to ground as switch S8 performs. In this case as S8, S5 and S6 are activated at the same time, there is no current flowing through phase B neither phase C.

After switches S1 and S5, S6 and S8 activation, the following activation is S7 and S6, this combination creates de magnetic vector C. Additionally, as previous stated, power switches S1 and S2 may also be activated to avoid overcurrent.

In the same way as the previous activations, the following activation would be switches S2 in power supply and S4, S6 and S8, this combination creates de magnetic vector B.

Following activation is switches S4 to ground and switches S2, S3 and S7 to power supply, this combination creates de magnetic vector A.

Next activation is switch S3 to power supply and switches S4, S5 and S8 to ground, this combination creates de magnetic vector C.

Next, switch S5 to ground and switches S1, S3 and S7 to power supply, this combination creates de magnetic vector B.

Finally, switches S1, S5, S6 and S8 are activated in order to create again magnetic vector A.

The activation of these six combinations allows the creation of a rotative magnetic vector used to synchronize the magnet of rotor. The angular separation of these six combinations is 60º.

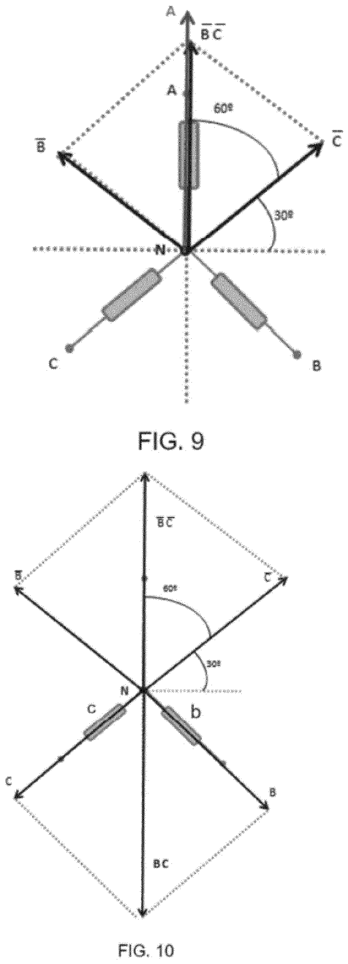

Alternatively, another embodiment for performing in normal operation is shown in figure 9. Said embodiment provides an optimized magnetic vector generation that minimizes the requested current per phase (a, b, c).

In this embodiment each magnetic vector is generated by the sum of three vectors. In this case, magnetic vector A is created by powering the three phases (a, b, c) at the same time.

The driving means is configured to sequentially drive the phases (a, b, c) such that for each phase the driving means is configured to:
- simultaneously close switches (S5, S6) of the switch assembly configured to be connected to ground (11) of the other phases (b, c) and close the switch (S1) of the phase (a) to be generated to be connected to power line (10) such that current simultaneously flows from the first terminal (A) of the phase (a) to be generated to the first electrical terminals (B, C) of the other phases (b, c) to generate by combination of the vectors of the phases (a, b, c, ...), a positive vector of each phase (a, b, c),
- simultaneously close switches (S2, S3) of the switch assembly configured to be connected to power line (10) of the other phases (b, c) and close the switch (S4) of the phase (a) to be generated to be connected to ground (11) such that current simultaneously flows from the first terminals (B, C) of the other phases (b, c) to the first terminal (A) of the phase to be generated (a) to generate by combination of the vectors of the phases (a, b, c, ...), a negative vector of each phase (a, b, c).

Based on the same sign convention, figure 9 shows the magnetic vector generation of this embodiment of the invention in the normal mode wherein the electronic switches power the three winding phases at the same time instead of independently. The current flows from phase a to phases b and c when switches S1, S5 and S6 are closed. This optimization allows to reduce the current needed to create magnetic vector A.

As soon as switches S1, S5 and S6 are activated, the magnetic vector A is generated, and it is composed by the sum of three magnetic vectors created by each phase. They have positive current in phase a and negative current in phases b and c.

In the same way as scheme proposed in figure 8, in order to avoid overcurrent in case of short-circuits in any winding phase, switch S8 can also be activated to avoid current through coils b and c. In this case as switches S8, S5 and S6 are activated at the same time, there is no current flowing through phase b neither phase c.

After the activation of switches S1 and S5 and S6, and optionally the activation of switch S8 is case of overcurrent due to a short-circuit, the following activation would be switches S1, S2 and S6, this combination creates de magnetic vector C as the sum of three magnetic vectors. The activation of these six combinations allows to create a rotative magnetic vector used to synchronize the magnet of the rotor. The angular separation of these six combinations is also 60º.

The main advantage of this improved embodiment for the switching activation is that the same current flows through the three phases at the same time. Therefore, current flowing at phase a creates a magnetic vector in 0º. The current flowing through coil b creates a magnetic vector at 300º and the current flowing through coil c creates a magnetic vector at 60º. These last two vectors can be decomposed in the direction of 0º summing their effects to the vector of coil a and also decomposed in 90º direction, whose effects are cancelled between magnetic vector of coil b and c.

Alternatively, another embodiment for performing in normal operation is possible. Said embodiment is slightly less efficient than the previous one.

In this embodiment each magnetic vector is generated by the sum of two vectors. In this case, magnetic vector A is created by powering the other two phases (b, c) at the same time.

The driving means is configured to sequentially drive the phases (a, b, c) such that for each phase the driving means is configured to:
- simultaneously close switches (S5, S6) of the switch assembly configured to be connected to ground (11) and configured to be connected to the other phases (b, c, ...) and close the switch (S7) of the additional branch of switches configured to be connected to power line (10) such that current simultaneously flows through the other phases (b, c, ...) from the second electrical terminal (B', C') to the first electrical terminal (B, C) to generate by combination of the vectors of the other phases (b, c, ...), a negative vector of the phase (a),
- simultaneously close switches (S2, S3) of the switch assembly configured to be connected to power line (10) and configured to be connected to the other phases (b, c, ...) and close the switch (S8) of the additional branch of switches configured to be connected to ground (11) such that current simultaneously flows through the other phases (b, c, ...) from the first electrical terminal (B, C) to the second electrical terminal (B', C') to generate by combination of the vectors of the other phases (b, c, ...), a positive vector of the phase (a).

The electronic switches power the two winding phases at the same time instead of independently. The current flows from neutral point N to phases b and c when switches S5, S6 and S7 are closed.

As soon as switches S5, S6 and S7 are activated, the magnetic vector A is generated, and it is composed by the sum of two magnetic vectors created by phases b and c. They have negative current in phases b and c.

A detailed magnetic vector analysis of the invention is shown in figure 10 where a failure occurs in phase a, either open-circuit or short-circuit. In this way only two magnetic vectors are not possible to be powered and four remaining vectors are available.

According to the invention the two remaining winding phases (b, c) are powered at same time in order to generate the two lost vectors caused by the failure of phase a. In this way, the original six magnetic vectors are still available.

Once a failure in a winding phase is detected the activation of power switches is adapted to failure.
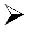 For each phase without failure, i.e., phases b and c:
   - close the switch (S2, S3) of the switch assembly configured to be connected to the power line (10) and close the switch (S8) of the additional branch of switches configured to be connected to ground (11) such that current flows through the phase (b, c) from the first electrical terminal (B, C) to the second electrical terminal (B', C') or neutral point (N) to generate a positive vector of the phases (b, c),
   - close the switch (S5, S6) of the switch assembly configured to be connected to the ground (11) and close the switch (S7) of the additional branch of switches configured to be connected to power line (10) such that current flows through the phase (b, c) from the second electrical terminal (B', C') or neutral point (N) to the first electrical terminal (B, C) to generate a negative vector of the phases (b, c).
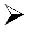 For the failed phase (a):
   - simultaneously close switches (S5, S6) of the switch assembly configured to be connected to ground (11) and configured to be connected to the phases without failure (b, c) and close the switch (S7) of the additional branch of switches configured to be connected to power line (10) such that current simultaneously flows through the phases without failure (b, c) from the second electrical terminal (B', C') or from the neutral point (N) to the first electrical terminal (B, C) to generate a negative vector of the failed phase (a) by combination of the vectors of the phases without failure (b, c),
   - simultaneously close switches (S2, S3) of the switch assembly configured to be connected to the power line (10) and configured to be connected to the phases without failure (b, c) and close the switch (S8) of the additional branch of switches configured to be connected to ground (11) such that current simultaneously flows through the phases without failure (b, c) from the first electrical terminal (B, C) to the second electrical terminal (B', C') or to the neutral point (N) to generate a positive vector of the failed phase (a) by combination of the vectors of the phases without failure (b, c).

Figure 10 shows phase a failed. Switch S7 is connected to power supply and switches S5 and S6 are activated to ground allowing current through winding phase b and c from neutral point (N), S7 connected to power, to terminals B and C. This creates vector BC, that is the same magnetic vector as A. The new vector generated BC is less efficient as the original A due to physical placement of coils b and c placed at 60º each but allows the continuous operation of the motor.

Under normal operation, and in an embodiment in which overcurrent is avoided in case of short-circuit, the activation required is switch S1 to power supply and switches S5, S6 and S8 activated to ground. If phase a fails, switch S8 is not activated anymore and S7 is the power switch activated. In this way, there is no current flowing through phase a because both terminals of winding phase a are connected to same potential as S1 and S7 are activated

Same process is used to create the magnetic vector A. As described before, S2 and S3 are activated to power allowing current through winding phase b and c to neutral point (N), S8 connected to ground. This creates the vector BC, that is the same magnetic vector as A. The new vector generated BC is less efficient as the original A due to physical placement of coils b and c placed at 60º each but allows the continuous operation of motor.

Under normal operation, and in the embodiment in which overcurrent is avoided in case of short-circuit, the activation required is S4 to ground and S2, S3 and S7 activated to power. In a failure condition S7 is not activated anymore and S8 is the power switch activated. In this way, there is no current flowing through phase a because both terminals of winding phase a are connected to same potential, ground potential, as switches S4 and S8 are activated.

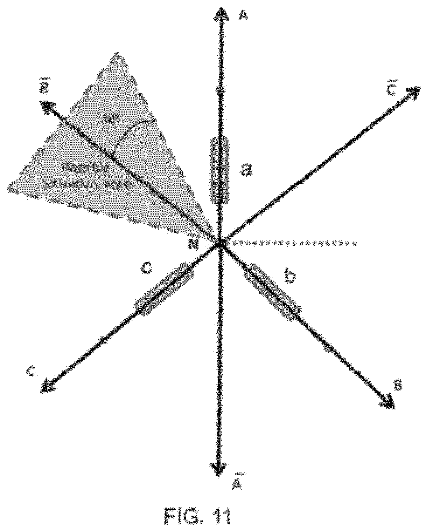

Figure 11 shows the detailed magnetic vector analysis of the invention where the maximum activation area for each phase is delimited. Figure 11 represents a configuration based on a single pair of pole rotor. This angle is reduced proportionally to number of pair of poles.

Each generated vector comprises an activation area of ± 360 / (4 x n) º for detecting the position of a rotor of the multi-phase electric motor. Specifically, in the shown embodiment, ± 30º are generated, n being three phases.

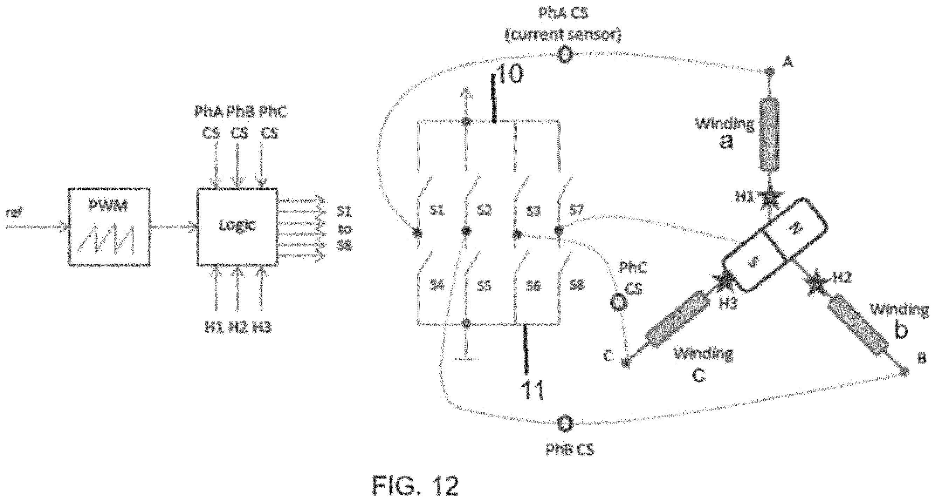

Figure 12 shows the activation for each phase in normal operation and also in case of failure of any phase. The main advantage of this system is the possibility to operate the motor by means of simple electronics because the detection of each rotor position is performed by standard simple hall sensors placed in the phase (a, b, c) positions as the magnetic vectors are generated in line with the phases (a, b, c) in the failure mode of operation and in the normal mode of operation.

Thus, it does not require a continuous sensor (encoder / resolver) that would imply the extra cost related to sensor, specific electronics required to measure these sensors and the algorithm requested to use these sensor to validate each interesting rotor position for phase switching. Most of the designs implement this algorithm in SW/FW lines of code in order to simplify the implementation but requires the inclusion of the microprocessor or FPGA.

The system proposed includes hall sensors to measure the rotor magnet position and also current sensors in each phase (a, b, c) to detect the overcurrent, short-circuit, or open-circuit.

Failure is detected by current sensors installed in each phase (a, b, c) to close the current loop. Said current sensors are located in series in every phase (a, b, c).

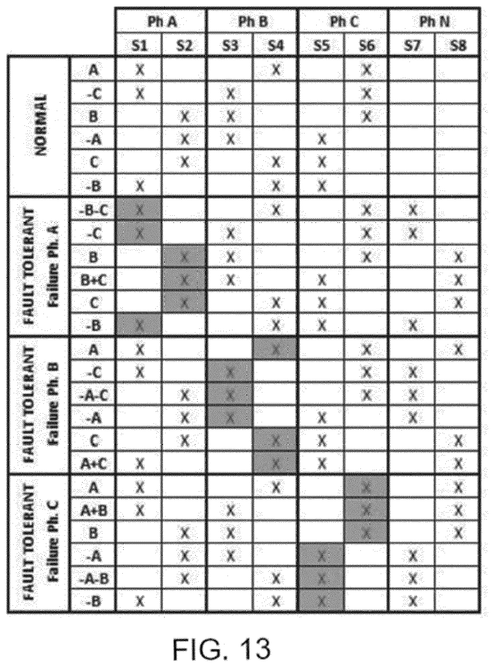

Figure 13 discloses a table in which the activation method of the switches is disclosed in the normal operating mode and in case of failure of each phase.

## Claims

1. Power activation device for a multi-phase electric motor, the electric motor comprising n-phases (a, b, c, ...) and each phase (a, b, c, ...) comprising a first electrical terminal (A, B, C, ...) and a second electrical terminal (A'; B', C', ...), the power activation device comprising:
• a switch assembly comprising n-branches of switches (S1, S2, S3, S4, S5, S6), the branches being connected in parallel and each branch configured to be connected in series to the first electrical terminal (A, B, C, ...) of a phase (a, b, c, ...),
• each branch of switches comprising two switches (S1, S4; S2, S5; S3; S6) located in series, one switch (S1, S2, S3) configured to be connected to a power line (10) and the other switch (S4, S5, S6) configured to be connected to ground (11),
the power activation device **characterized in that** it further comprises:
• at least one additional branch of switches (S7, S8) connected in parallel to the branches of the switch assembly and configured to be connected in series with the second terminal (A', B', C', ...) of the phases (a, b, c, ...),
• a driving means for driving the multi-phase electric motor, the driving means being connected to the switches assembly and being configured to shift between a power activation normal mode of operation and a power activation failure mode of operation when a failure in a phase (a, b, c, ...) is detected, in the failure mode the driving means being configured to sequentially drive the phases (a, b, c):
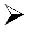 for each phase without failure (b, c, ...):
- close the switch (S2, S3) of the switch assembly configured to be connected to the power line (10) and close the switch (S8) of the additional branch of switches configured to be connected to ground (11) such that current flows through the phase (b, c, ...) from the first electrical terminal (B, C) to the second electrical terminal (B', C') to generate a positive vector of the phases (b, c, ...),
- close the switch (S5, S6) of the switch assembly configured to be connected to the ground (11) and close the switch (S7) of the additional branch of switches configured to be connected to power line (10) such that current flows through the phase (b, c, ...) from the second electrical terminal (B', C') to the first electrical terminal (B, C) to generate a negative vector of the phases (b, c, ...)
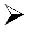 for the failed phase (a):
- simultaneously close switches (S5, S6) of the switch assembly configured to be connected to ground (11) and configured to be connected to the phases without failure (b, c, ...) and close the switch (S7) of the additional branch of switches configured to be connected to power line (10) such that current simultaneously flows through the phases without failure (b, c, ...) from the second electrical terminal (B', C') to the first electrical terminal (B, C) to generate a negative vector of the failed phase (a) by combination of the vectors of the phases without failure (b, c, ...),
- simultaneously close switches (S2, S3) of the switch assembly configured to be connected to the power line (10) and configured to be connected to the phases without failure (b, c, ...) and close the switch (S8) of the additional branch of switches configured to be connected to ground (11) such that current simultaneously flows through the phases without failure (b, c, ...) from the first electrical terminal (B, C) to the second electrical terminal (B', C') to generate a positive vector of the failed phase (a) by combination of the vectors of the phases without failure (b, c, ...).

2. Power activation device for a multi-phase electric motor, according to claim 1, wherein in the power activation normal mode of operation, the driving means is configured to sequentially drive the phases (a, b, c) such that for each phase (a, b, c, ...) the driving means is configured to:
- close the switch (S1, S2, S3) of the switch assembly configured to be connected to the power line (10) and close the switch (S8) of the additional branch of switches configured to be connected to ground (11) such that current flows through the phase (a, b, c, ...) from the first electrical terminal (A, B, C) to the second electrical terminal (A', B', C') to generate a positive vector of the phase (a, b, c, ...),
- close the switch (S4, S5, S6) of the switch assembly configured to be connected to the ground (11) and close the switch (S7) of the additional branch of switches configured to be connected to power line (10) such that current flows through the phase (a, b, c, ...) from the second electrical terminal (A', B', C') to the first electrical terminal (A, B, C) to generate a negative vector of the phase (a, b, c, ...).

3. Power activation device for a multi-phase electric motor, according to claim 1, wherein in the power activation normal mode of operation, the driving means is configured to sequentially drive the phases (a, b, c) such that for each phase (a, b, c, ...) the driving means is configured to:
- simultaneously close switches (S5, S6) of the switch assembly configured to be connected to ground (11) and configured to be connected to the other phases (b, c, ...) and close the switch (S7) of the additional branch of switches configured to be connected to power line (10) such that current simultaneously flows through the other phases (b, c, ...) from the second electrical terminal (B', C') to the first electrical terminal (B, C) to generate by combination of the vectors of the other phases (b, c, ...), a negative vector of the phase (a),
- simultaneously close switches (S2, S3) of the switch assembly configured to be connected to power line (10) and configured to be connected to the other phases (b, c, ...) and close the switch (S8) of the additional branch of switches configured to be connected to ground (11) such that current simultaneously flows through the other phases (b, c, ...) from the first electrical terminal (B, C) to the second electrical terminal (B', C') to generate by combination of the vectors of the other phases (b, c, ...), a positive vector of the phase (a).

4. Power activation device for a multi-phase electric motor, according to claim 1, wherein in the power activation normal mode of operation, the driving means is configured to sequentially drive the phases (a, b, c) such that for each phase (a, b, c, ...) to be generated, the driving means is configured to:
- simultaneously close switches (S5, S6) of the switch assembly configured to be connected to ground (11) of the other phases (b, c) and close the switch (S1) of the phase (a) to be generated to be connected to power line (10) such that current simultaneously flows from the first terminal (A) of the phase (a) to be generated to the first electrical terminals (B, C) of the other phases (b, c) to generate by combination of the vectors of the phases (a, b, c, ...), a positive vector of each phase (a, b, c),
- simultaneously close switches (S2, S3) of the switch assembly configured to be connected to power line (10) of the other phases (b, c) and close the switch (S4) of the phase (a) to be generated to be connected to ground (11) such that current simultaneously flows from the first terminals (B, C) of the other phases (b, c) to the first terminal (A) of the phase to be generated (a) to generate by combination of the vectors of the phases (a, b, c, ...), a negative vector of each phase (a, b, c).

5. Power activation device for a multi-phase electric motor, according to any preceding claim, wherein the electric motor comprises each phase star-connected.

6. Power activation device for a multi-phase electric motor, according to claim 5, wherein in a star connection the second terminals (A', B', C') are connected in a neutral point (N) and the additional branch of switches (S7, S8) is configured to be connected in series with the neutral point (N).

7. Power activation device for a multi-phase electric motor, according to claim 2 and 6, wherein in the power activation normal mode of operation, the driving means is configured to connect the first terminal (A, B, C, ...) of the phases (a, b, c) that are not being driven and the neutral point (N) to the same potential at the same time in order to avoid overcurrent.

8. Power activation device for a multi-phase electric motor, according to claim 6 or 7, wherein in the failure mode of operation the driving means is configured to connect the first terminal (A, B, C, ...) and the neutral point (N) of the failed phase to the same potential.

9. Power activation device for a multi-phase electric motor, according to any preceding claim, wherein the electric motor is a three-phases electric motor.

10. Power activation device for a multi-phase electric motor, according to any preceding claim, wherein the driving means is configured to generate 2 x n vectors equally spaced among them, each vector located in line with a phase (a, b, c).

11. Power activation device for a multi-phase electric motor, according to claim 10, wherein each generated vector comprises an activation area of ± 360 / (4 x n) º for detecting the position of a rotor of the multi-phase electric motor.

12. Multi-phase electric motor, comprising n-phases (a, b, c, ...) and each phase (a, b, c, ...) comprising a first electrical terminal (A, B, C, ...) and a second electrical terminal (A'; B', C', ...), **characterized in that** it comprises a power activation device according to any preceding claim.

13. Power activation method for a multi-phase electric motor, the electric motor comprising n-phases (a, b, c, ...) and each phase (a, b, c, ...) comprising a first electrical terminal (A, B, C, ...) and a second electrical terminal (A'; B', C', ...), and a power activation device comprising:
• a switch assembly comprising n-branches of switches (S1, S2, S3, S4, S5, S6), the branches being connected in parallel and each branch configured to be connected in series to the first electrical terminal (A, B, C, ...) of a phase (a, b, c, ...),
• each branch of switches comprising two switches (S1, S4; S2, S5; S3; S6) located in series, one switch (S1, S2, S3) configured to be connected to a power line and the other switch (S4, S5, S6) configured to be connected to ground,
the power activation method **characterized in that** the driving means further comprises:
• at least one additional branch of switches (S7, S8) connected in parallel to the branches of the switch assembly and configured to be connected in series with the second terminal (A', B', C', ...) of the phases (a, b, c, ...),
• a driving means for driving the multi-phase electric motor, the driving means being connected to the switches assembly and being configured to shift between a power activation normal mode of operation and a power activation failure mode of operation when a failure in a phase is detected,
the power activation method comprising, in the failure mode, the step of the driving means sequentially driving the phases (a, b, c):
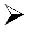 for each phase without failure (b, c, ...):
- closing the switch (S2, S3) of the switch assembly configured to be connected to the power line (10) and closing the switch (S8) of the additional branch of switches configured to be connected to ground (11) such that current flows through the phase (b, c, ...) from the first electrical terminal (B, C) to the second electrical terminal (B', C') generating a positive vector of the phases (b, c, ...),
- closing the switch (S5, S6) of the switch assembly configured to be connected to ground (11) and closing the switch (S7) of the additional branch of switches configured to be connected to power line (10) such that current flows through the phase (b, c, ...) from the second electrical terminal (B', C') to the first electrical terminal (B, C) generating a negative vector of the phases (b, c, ...),
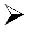 for the failed phase (a):
- simultaneously closing switches (S5, S6) of the switch assembly configured to be connected to the ground (11) and configured to be connected to the phases without failure (b, c, ...) and closing the switch (S7) of the additional branch of switches configured to be connected to power line (10) such that current simultaneously flows through the phases without failure (b, c, ...) from the second electrical terminal (B', C') to the first electrical terminal (B, C) to generate a negative vector of the failed phase (a) by combination of the vectors of the phases without failure (b, c, ...),
- simultaneously closing switches (S2, S3) of the switch assembly configured to be connected to the power line (10) and configured to be connected to the phases without failure (b, c, ...) and closing the switch (S8) of the additional branch of switches configured to be connected to ground (11) such that current simultaneously flows through the phases without failure (b, c, ...) from the first electrical terminal (B, C) to the second electrical terminal (B', C') to generate a positive vector of the failed phase (a) by combination of the vectors of the phases without failure (b, c, ...).
